(19) Europäisches Patentamt / European Patent Office / Office européen des brevets

(11) **EP 4 644 057 A1**

(12) **EUROPÄISCHE PATENTANMELDUNG**

(43) Veröffentlichungstag:
**05.11.2025 Patentblatt 2025/45**

(51) Internationale Patentklassifikation (IPC):
**B25J 9/16** (2006.01)

(21) Anmeldenummer: **24173454.0**

(22) Anmeldetag: **30.04.2024**

(52) Gemeinsame Patentklassifikation (CPC):
**B25J 9/1664; B25J 9/1674;** B25J 9/1687;
G05B 2219/34402; G05B 2219/39102;
G05B 2219/39106; G05B 2219/40013;
G05B 2219/40453

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Grammatke, Kay**
**09232 Hartmannsdorf (DE)**
• **Heber, Tino**
**09599 Freiberg (DE)**
• **Hüfner, Holger**
**02625 Bautzen (DE)**

(74) Vertreter: **Siemens Patent Attorneys**
**Postfach 22 16 34**
**80506 München (DE)**

(54) **ERMITTELN EINER BAHNBEWEGUNG EINER KINEMATIK ZUR AUFNAHME EINES GEGENSTANDES VON EINEM FÖRDERSYSTEM**

(57) Die Erfindung betrifft ein Verfahren zum Ermitteln einer Bahnbewegung einer Kinematik zur Aufnahme eines Gegenstandes von einem Fördersystem, aufweisend folgende Schritte:
- Bereitstellen eines Kinetikmodells der Kinematik abhängig von Massewerten, Trägheitsmomentwerten oder Trägheitstensorwerten der Kinematik,
- Vorgeben von maximalen Antriebskräften und/ oder maximalen Antriebsmomenten von Antrieben der Kinematik,
- Ermitteln von Grenzwerten für Zustandsgrößen der Bahnbewegung, umfassend Geschwindigkeit und Beschleunigung, in Abhängigkeit von den maximalen Antriebskräften und/ oder maximalen Antriebsmomenten basierend auf dem Kinetikmodell, wobei die Grenzwerte für eine Vielzahl von Punkten eines Arbeitsraumes der Kinematik ermittelt werden,
- Extrapolation einer Position eines virtuellen Punktes auf dem Fördersystem basierend auf Werten der Position und Geschwindigkeit und/oder Beschleunigung des virtuellen Punktes in jeweiligen Abtastzeitpunkten,
- Ermitteln von Sollwerten für die Bahnbewegung in Abhängigkeit von den ermittelten Grenzwerten und von der extrapolierten Position, wobei die Bahnbewegung als Funktion der Position des virtuellen Punktes modelliert wird.

Die Erfindung betrifft ferner ein zugehöriges Computerprogramm und eine zugehörige Steuerungseinrichtung.

Fig. 1

EP 4 644 057 A1

**Beschreibung**

Die Erfindung betrifft ein Verfahren zum Ermitteln einer Bahnbewegung einer Kinematik zur Aufnahme eines Gegenstandes von einem Fördersystem sowie eine zugehörige Steuerungseinrichtung.

In vielen Anwendungsbereichen in der Industrieautomatisierung werden Gegenstände oder Materialien oder Produktkomponenten zwischen Bearbeitungsstationen und/ oder Förderbändern bewegt oder umgelagert, um beispielsweise einen Fertigungs- oder Bearbeitungsprozess zu durchlaufen oder zu logistischen Zwecken oder Wartungszwecken innerhalb einer Automatisierungsanlage. Beispielsweise kommen Gegenstände auf einem Förderband an, die in einen Karton verpackt werden oder die in einer Station mit einer Flüssigkeit befüllt werden oder die durch eine Werkzeugmaschine bearbeitet werden.

Mittels eines Handlingssystems werden solche Gegenstände oder Werkstücke, Produkte etc. von einem Förderband, auf dem sie zufällig angeordnet sind, auf ein anderes System umgelagert. Es ist meist ein System, das zur Erkennung der Position und Bewegung von Objekten ausgebildet ist, zur Erfassung der Gegenstände vorgesehen, beispielsweise eine Kamera. Es wird dann eine geeignete Bahn ermittelt, mit der das Handling System die Gegenstände an den vorgesehenen Platz, beispielsweise in die nächste Bearbeitungsmaschine, befördert.

Anwendungen zur Aufnahme von Gegenständen mittels Robotern von Förderbändern sind auch als sog. Conveyor Tracking bekannt.

Handlingssysteme sind typischerweise Kinematiken oder Mehrachsroboter. Beispielsweise werden Knickarmroboter eingesetzt, die Greifwerkzeuge am Endeffektor aufweisen zur Aufnahme der Gegenstände.

Für die Aufnahme der Gegenstände von einem Fördersystem wird die Bewegung des Handlingssystems mit dem Förderband synchronisiert und es ist von einem Aufnahmepunkt auf dem Förderband aus eine geeignete Bahn hin zu einem Ablagepunkt zu bestimmen. Bekannte Lösungsansätze berücksichtigen die Grenzdynamik für eine zulässige Bewegung durch einen Anwender im Rahmen der Programmierung. Der Anwender muss die Bahn abschnittsweise so bestimmen, dass die Dynamikgrenzen nicht verletzt werden, gleichzeitig müssen Banddynamik und Auswirkungen auf den Arbeitsraum berücksichtigt werden. Dies ist ein aufwändiges manuelles Vorgehen.

Vor diesem Hintergrund ist es eine Aufgabe der vorliegenden Erfindung eine Bahnplanung für eine Kinematik zur Aufnahme eines Gegenstandes von einem Fördersystem zu verbessern. Diese Aufgabe wird durch die Merkmale der unabhängigen Ansprüche gelöst. Vorteilhafte Ausgestaltungen sind in den abhängigen Ansprüchen angegeben.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Ermitteln einer Bahnbewegung einer Kinematik zur Aufnahme eines Gegenstandes von einem Fördersystem, aufweisend folgende Schritte:

- Bereitstellen eines Kinetikmodells der Kinematik abhängig von Massewerten, Trägheitsmomentwerten oder Trägheitstensorwerten der Kinematik,
- Vorgeben von maximalen Antriebskräften und/ oder maximalen Antriebsmomenten von Antrieben der Kinematik,
- Ermitteln von Grenzwerten für Zustandsgrößen der Bahnbewegung, umfassend Geschwindigkeit und Beschleunigung, in Abhängigkeit von den maximalen Antriebskräften und/ oder maximalen Antriebsmomenten basierend auf dem Kinetikmodell, wobei die Grenzwerte für eine Vielzahl von Punkten eines Arbeitsraumes der Kinematik ermittelt werden,
- Extrapolation einer Position eines virtuellen Punktes auf dem Fördersystem basierend auf Werten der Position, Geschwindigkeit und Beschleunigung des virtuellen Punktes in jeweiligen Abtastzeitpunkten,
- Ermitteln von Sollwerten für die Bahnbewegung in Abhängigkeit von den ermittelten Grenzwerten und von der extrapolierten Position, wobei die Bahnbewegung als Funktion der Position des virtuellen Punktes modelliert wird.

Es wird erfindungsgemäß vorgeschlagen, ein Kinetikmodell so zu verwenden, dass maximale Antriebskräfte oder maximale Antriebsmomente der beteiligten Antriebe als Ausgangswerte vorgegeben werden, um daraus Grenzwerte zu berechnen für die Zustandsgrößen der Bahnbewegung, also die möglichen einzunehmenden Kombinationen aus Position, Geschwindigkeit und Beschleunigung.

Daraus werden wiederum die für die Sollwertführung für eine vorgesehene Bahn der Kinematik wirkenden Begrenzungen, also insbesondere eine maximale Geschwindigkeit und Beschleunigung je Position, angepasst.

Entsprechen die Kräfte und Momente den maximalen physikalischen Möglichkeiten der Antriebe, so erhält man die maximal möglichen Grenzwerte der Zustandsgrößen an diesem Punkt der Bahn. Damit lassen sich unter Einhaltung der energetischen Grenzwerte der Antriebe dynamische Grenzwerte der Bahn, insbesondere an jedem oder jedem interessierenden Arbeitspunkt berechnen.

Ein Kinetikmodell repräsentiert die kinetischen Eigenschaften des Handling Systems. Mit dem inversen Kinetikmodell (inverse Bewegungsgleichung) ist es möglich, für jeden Punkt auf der Bahn die für diesen Zustand notwendigen Antriebskräfte und -momente zu berechnen. Umgekehrt ist es möglich mit dem Kinetikmodell an jedem Punkt der Bahn einen Kraft- und Momentenvektor der Antriebe vorzugeben und die zugeordneten Zustandsgrößen der Bahn unter Berücksichtigung geeigneter Startwerte zu berechnen.

Die Vorgabe der maximalen Kraft- oder Momentenvektoren ergibt sich beispielsweise aus Herstellerangaben der Antriebshersteller.

Als Parameter des Kinetikmodells gehen Massen, Trägheitsmomente und/ oder Trägheitstensoren ein, je nach Ausgestaltung der Kinematik. Diese Parameter sind je Kinematik zu ermitteln, basierend auf Angaben des Roboterherstellers oder Messungen oder Abschätzungen. Zusätzlich gehen in Ausgestaltungen des Verfahrens Massen oder Trägheiten der aufzunehmenden Gegenstände ein.

Somit ergeben sich für eine konkrete, für eine Aufnahme eines Gegenstandes von einem Förderband eingesetzte Kinematik, beispielsweise einen Sechsarmroboter, einen Portalroboter, eine Delta-Kinematik, oder ähnliche geeignete Roboter, im Zusammenspiel mit den eingesetzten Antrieben spezifische Grenzwerte für Zustandsgrößen der Bahnbewegung. Insbesondere ergeben sich spezifische Grenzwerte für die Geschwindigkeit und die Beschleunigung der Bewegung eines Endeffektors oder eines aufgenommenen Gegenstandes an einem Punkt auf einer für die Bewegung vorgesehenen Bahn.

In Abhängigkeit von der Anordnung der Werkstücke auf dem Zuführband kann eine Bahndynamik der Roboterbewegung so vorgesehen werden, dass die Bahn die dynamischen oder energetischen Grenzen des Handling Systems nicht überschreitet und vorteilhafterweise Antriebe des Roboters nicht überlastet werden. So wird sichergestellt, dass das Handling System der berechneten Bahn folgen kann und weder Störungen des Prozessablaufs noch Zerstörungen von Maschinenkomponenten auftreten.

Die für die Bahnbewegung der Kinematik auszugebenden Sollwerte werden zudem in Abhängigkeit von der extrapolierten Position ermittelt. Dafür erfolgt eine Extrapolation einer Position eines virtuellen Punktes auf dem Fördersystem, um die Bandbewegung vorausschauend zu berücksichtigen. Unabhängig von tatsächlich auf einem Förderband des Fördersystems liegenden Gegenständen wird rein die Banddynamik berücksichtigt. Insbesondere verändert sich eine Geschwindigkeit eines Bandes und entsprechend eine Beschleunigung im regulären Betrieb nur selten. Für diesen regulären Betrieb ergibt die Extrapolation keine spezifische Anpassung der Sollwerte oder keine Korrektur einer vorlaufenden Sollwertführung abhängig von der Banddynamik. Sobald jedoch eine Unregelmäßigkeit im Betrieb des zuführenden Bandes auftritt, beispielsweise ein Halt oder ein Abbremsen, wird diese Bewegungsänderung in der Extrapolation berücksichtigt. Die Bandbewegungen werden somit für die Zuordnung zum Arbeitsraum des Handling Systems vorlaufend extrapoliert.

Die vorlaufende Sollwertführung bestimmt eine mögliche Bahnbewegung, die die Grenzwerte des Systems, die über das Kinetikmodell an jedem Punkt der Bahn ermittelt werden, einhält, wobei die angenommene Position im Arbeitsraum sich aus der Extrapolation der Bandbewegung ergibt.

Die Extrapolation ermöglicht es, dass ein unvorhergesehenes Anhalten oder Beschleunigen des Bandes für das Aufnehmen eines auf dem Fördersystem befindlichen Gegenstandes berücksichtigt wird. Insbesondere wird dadurch ein Aufsynchronisieren der Bewegung der Kinematik auf die Bewegung des Bandes beeinflusst oder eine Synchronfahrt von Kinematik und Band. Die Extrapolation basiert beispielsweise auf Werten der Position, Geschwindigkeit und Beschleunigung des virtuellen Punktes in jeweiligen Abtastzeitpunkten. Insbesondere wird die Dynamik des Fördersystems unabhängig von den auf dem Fördersystem befindlichen Gegenständen extrapoliert. In die Extrapolation gehen insbesondere die Position und die Dynamik des Bandes ein, sowie die Zeit bis zum Start der Bahnbewegung.

Die vorgeschlagenen Verbesserungen bei der Berücksichtigung von dynamischen Änderungen der Bandbewegung führen zu einer besseren Auslastung der Antriebe und zu energieeffizienteren Vorgängen. Durch die Berücksichtigung von ruckbegrenzten Bewegungen wird die Auslastung und Energieeffizienz weiter verbessert.

Gemäß einer Ausgestaltung eliminiert ein Modellieren der Bahnbewegung als Funktion der extrapolierten Position auf dem Fördersystem eine explizite zeitliche Abhängigkeit. Herkömmlicherweise ist die Bahnbewegung als Funktion der Zeit angegeben, insbesondere als Profil v(t), also Geschwindigkeit über Zeit. Die Bahnbewegung P wird beispielsweise als Funktion des Bandes b modelliert, sodass zeitliche Einflüsse eliminiert werden:

$$P = f(b(t)) = f(b)$$

Dies ermöglicht eine Vorgabe eines bandbezogenen Bewegungsprofils für die Bewegung der Kinematik, das vorzugsweise die Vorgänge des Aufsynchronisierens und des Synchronfahrens zwischen Kinematik und Band verbessert. Insbesondere wird durch den Bandbezug der Rechenaufwand deutlich reduziert, da die grundlegenden zeitlichen Einflüsse des Bandes damit eliminiert sind.

Gemäß einer Ausgestaltung erfolgt ferner eine Extrapolation der zu der extrapolierten Position zugehörigen Dynamik, insbesondere eine Extrapolation einer Geschwindigkeit und einer Beschleunigung des virtuellen Punktes. Dadurch lassen sich die Einflüsse der Dynamik, wie der Beschleunigung, besser berücksichtigen.

Gemäß einer Ausgestaltung werden ferner Grenzwerte für einen Ruck als Zustandsgröße ermittelt. Somit werden zudem auf einen maximalen Ruck hin optimierte Bewegungsprofile ermittelt. Vorteilhafterweise werden dadurch die Gelenke der Kinematik weniger stark beansprucht und eine Bewegung zur Aufnahme und zum Umlagern des Gegenstandes wird möglichst gleichförmig ausgebildet.

Gemäß einer Ausgestaltung gehen ferner axiale Beschränkungen als Randbedingung in das Ermitteln der Sollwerte ein. Somit können Schranken oder Limits für die Sollwerte vorgegeben werden, die je Achse eingehalten werden sollen. Die Sollwertführung kann dadurch zusätzlich zu den Grenzen, die sich durch die Berücksichtigung von maximal möglichen Belastungen an einzelnen Antrieben ergeben, vorgegeben werden. Beispielsweise können einzelne Achsen so gezielt geschont werden oder einfacher überwachbar betrieben werden.

Gemäß einer Ausgestaltung gehen ferner programmierte, insbesondere bahnspezifische, Beschränkungen als Randbedingung in das Ermitteln der Sollwerte ein. Dadurch werden beispielsweise zusätzlich applikative Vorgaben, die die Bewegung des aufzunehmenden Gegenstandes betreffen, ermöglicht. Beispielsweise sollen bewegte Flüssigkeiten in Behältern oder sensible Gegenstände nur mit einer bestimmten maximalen Geschwindigkeit oder Beschleunigung oder einem bestimmten maximalen Ruck bewegt werden.

Somit werden insbesondere in Ausgestaltungen auch bahnbezogene Grenzen wie programmierte und axiale Grenzen eingehalten und die resultierende ruckbegrenzte Bahn ergibt sich aus dem Minimum aller wirksamen Begrenzungen.

Gemäß einer Ausgestaltung werden die Sollwerte für die Bahnbewegung vorlaufend in Abhängigkeit von den ermittelten Grenzwerten, insbesondere für eine vorgesehene Bahn, ermittelt und online in Abhängigkeit von der extrapolierten Position, insbesondere für einen Sollwert je Takt, korrigiert. Somit wird beispielsweise ein Bewegungsprofil fortlaufend und vorausschauend berechnet, das die Dynamikgrenzen berücksichtigt. Eine Anpassung der Sollwerte aufgrund einer extrapolierten Position, die von einer angenommenen Position zu einem bestimmten Takt abweicht, erfolgt online, also im laufenden Betrieb und insbesondere im Rahmen einer Ausgleichsbewegung oder Korrekturbewegung, die der Kinematik durch eine Steuerung vorgegeben wird. Auch diese Korrekturbewegung wird insbesondere bandbezogen vorgegeben, so dass sowohl die Sollwertvorgabe mittels des vorlaufenden Profils als auch die Korrekturbewegung besonders vorteilhaft beide bandbezogen vorliegen. Insbesondere, wenn die Korrekturbewegungen länger als ein Abtastbereich oder ein Takt sind, werden durch die Bandrelation die zeitlichen Einflüsse vorteilhaft eliminiert.

Gemäß einer Ausgestaltung wird eine Korrektur eines Sollwertes, die sich aus einer Abweichung der extrapolierten Position des virtuellen Punktes auf dem Fördersystem und einer tatsächlichen Position ergibt, online während eines Synchronisiervorganges zwischen dem Fördersystem und der Kinematik oder online bei einer Synchronfahrt des Fördersystems mit der Kinematik vorgenommen. Eine typische Bewegung eines robotergeführten Greifers zur Aufnahme eines Gegenstandes von einem Förderband besteht sowohl aus dem sogenannten Aufsynchronisieren bis zu einer Position, in der sich der Greifer oberhalb des Gegenstandes bzw. die Kinematik passend zur Aufnahme des Gegenstandes befindet, als auch aus dem daran anschließenden Synchron-Fahren bis der Gegenstand möglichst ruckfrei vom Greifer oder einem ähnlichen Werkzeug aufgenommen wurde und keinen Kontakt mehr zum Band hat.

Gemäß einer Ausgestaltung werden dynamische Reserven vorgesehen zur Vorab-Kompensation bei einem Überschreiten vorgesehener Beschränkungen aufgrund der durch die Extrapolation korrigierten Sollwerte. Somit wird als Vorsichtsmaßnahme das Überschreiten der Beschränkungen, die sich insgesamt aufgrund der Beschränkungen der ermittelten Grenzwerte sowie ferner beispielsweise vorgesehener axialer und/oder programmierter Beschränkungen ergeben, durch die Korrektur aufgrund der Extrapolation, verhindert.

Da die Extrapolation nicht exakt die später vorliegenden realen Größen widerspiegelt, werden dynamische Reserven vorgesehen. Die extrapolierten Größen können sich somit von den später real vorliegenden Größen bis zu einem bestimmten Maß unterscheiden, ohne dass eine Überschreitung der Beschränkungen erfolgt.

Gemäß einer Ausgestaltung berücksichtigt eine dynamische Reserve die Kompensation der Bandgeschwindigkeit in Bandrichtung. Somit können Schwankungen bei der Bewegung des Bandes in Bandrichtung beispielsweise aufgrund von Schwankungen in der Geschwindigkeit toleriert werden.

Gemäß einer Ausgestaltung berücksichtigt eine dynamische Reserve die Kompensation der Bandbewegung in allen Raumrichtungen.

Gemäß einer Ausgestaltung weist das Kinetikmodell ein Lastmoment-abhängiges Teilmodell auf. Beispielsweise wird durch das Teilmodell eine Reibungskennlinie abgebildet. Um die Einflüsse der realen Mechanik bei Conveyor-Tracking-Anwendungen besser abzubilden, enthält das Kinetikmodell neben der bekannten Modellierung von Trägheiten zudem ein Teilmodell zur Abbildung der Reibung, das um die spezifischen Einflüsse von Lastmomenten erweitert ist.

Durch die Verbesserungen beim Kinetischen Modell zur Abstraktion der Conveyor-Tracking-Verläufe werden die Antriebe nochmals besser ausgelastet, sodass ein Betrieb noch energieeffizienter erfolgt.

Beispielsweise wird als das übertragene Lastmoment das am Getriebeausgang wirkende Lastmoment verwendet. Neben der Abhängigkeit von einer Drehzahl oder Geschwindigkeit, wie in den folgenden Abschnitten noch erläutert wird, ändert sich das aktuelle Reibmoment oder die aktuelle Reibkraft in Abhängigkeit vom zu übertragenden Moment oder der zu übertragenden Kraft, also von der auftretenden Last. So werden z.B.

Flächen in Getrieben, Gleit- und Kugellagern etc. je nach auftretender Last und damit je nach übertragenem Moment oder übertragener Kraft mit unterschiedlicher Kraft aufeinandergepresst, so dass sich die Reibmomente oder Reibkräfte ändern. Dadurch wird die Modellierung vorteilhaft exakter.

Gemäß einer Ausgestaltung weist das Teilmodell ein Reibmoment modelliert in Abhängigkeit von einer Gelenkgeschwindigkeit auf.

Eine analytische Darstellung des Reibmomentes eines aktiven Gelenks sieht beispielsweise folgendermaßen aus:

$$M_{Reib} = f(\dot{q})$$

Das Reibmoment ist in erster Näherung abhängig von der Gelenkgeschwindigkeit. Es wird eine weitere Abhängigkeit des Reibmoments berücksichtigt, nämlich die vom übertragenen Moment des Getriebes. Entsprechend wird die analytische Darstellung erweitert

$$M_{Reib} = f(\dot{q}, M_{Last})$$

Analytisch kann der Zusammenhang so dargestellt werden:

$$M_{Reib} = f(\dot{q}) * f(M_{Last})$$

Gerade für nichtlinear verkoppelte mechanische Systeme wie Roboter und Handling Systeme ist die Berücksichtigung der gelenkspezifischen Lastmomente von besonderem Vorteil, da sich diese abhängig von den Bahnparametern, Gelenkstellungen und bewegten Werkstücken fortlaufend ändern.

Für die Modellierung der lastmomentabhängigen Funktion ist beispielsweise eine Variante mit festem Bezug vorzusehen, bei dem ein Anpassfaktor $K_L$ vorgesehen ist zur Anpassung an die realen mechanischen Verhältnisse:

$$f(M_{Last}) = M_{Last} * K_L$$

So werden beispielsweise spezifische Charakteristika der verwendeten Kinematik abgebildet, die für einen realen Aufbau in Tests ermittelt werden.

Für die Modellierung der geschwindigkeitsabhängigen Funktion ist beispielsweise eine Variante mit Parametern m und n vorzusehen, wobei die Parameter zur Darstellung der Haftreibungseffekte durch weitere Maßnahmen abhängig von $\dot{q}$ angepasst werden:

$$f(\dot{q}) = m * \dot{q} + n$$

Gemäß einem Ausführungsbeispiel wird ein Reibmoment des Teilmodells durch ein Kennfeld abgebildet. So können im Modell zu verwendende Werte besonders einfach ausgelesen werden. Ein Kennfeld stellt eine im Vergleich mit einem fixen mathematischen Abbild besonders flexible Lösung dar. Gemäß einem Ausführungsbeispiel werden Zwischenwerte zwischen Punkten des Kennfeldes interpoliert.

In einer Variante wird die Reibung nur als Reibung in Getrieben modelliert. Die kinematische Kette hat aktive, beispielsweise mit Getrieben angetriebene, und passive, nicht angetriebene Gelenke und Lagerstellen. Häufig macht die Reibung der Getriebe der aktiven Gelenke einen Großteil der Reibung aus. Somit wird nur die Reibung in den Getrieben modelliert. Vorteilhafterweise vereinfacht sich dadurch die Modellierung. Dies kann für rotatorische oder lineare Gelenke erfolgen.

Die Erfindung betrifft ferner ein Computerprogramm, umfassend Befehle, die bei der Ausführung des Programms durch einen Computer diesen veranlassen, das Verfahren nach einem der oben beschriebenen Ausgestaltungen auszuführen.

Die Erfindung betrifft ferner eine Steuerungseinrichtung ausgebildet und eingerichtet zum Ermitteln einer Bahnbewegung einer Kinematik zur Aufnahme eines Gegenstandes von einem Fördersystem gemäß einer der oben beschriebenen Ausgestaltungen. Die Steuerungseinrichtung ist beispielsweise als PLC, Programmable Logic Controller, ausgebildet und für Bewegungsführungsaufgaben wie die vorliegend beschriebene ausgestaltet und eingerichtet. Beispielsweise wird eine separat zu einer Robotersteuerung eingesetzte übergeordnete Steuerung für die Bewegungsaufgaben der Kinematik und des Fördersystems insgesamt eingerichtet.

Die Erfindung wird nachfolgend anhand von Ausführungsbeispielen mit Hilfe der Figuren näher erläutert. Es zeigen:

Figur 1 eine schematische Darstellung zur Veranschaulichung eines mechanischen Aufbaus einer Conveyor-Tracking-Anwendung;

Figur 2 eine schematische Darstellung zur Veranschaulichung des Verfahrens zur Ermittlung eines Bahnbewegung gemäß einem ersten Ausführungsbeispiel;

Figur 3 eine schematische Darstellung zur Veranschaulichung des Verfahrens zur Ermittlung eines Bahnbewegung gemäß einem zweiten Ausführungsbeispiel;

Figur 4 eine schematische Darstellung eines Diagramms des Reibmomentes zur Berücksichtigung in einem Verfahren gemäß dem Stand der Technik;

Figur 5 eine schematische Darstellung eines Diagramms des Reibmomentes zur Berücksichtigung in einem Verfahren gemäß einem dritten Ausführungsbeispiel der Erfindung.

In den Figuren sind funktionsgleiche Elemente mit denselben Bezugszeichen versehen, sofern nichts anderes angegeben ist.

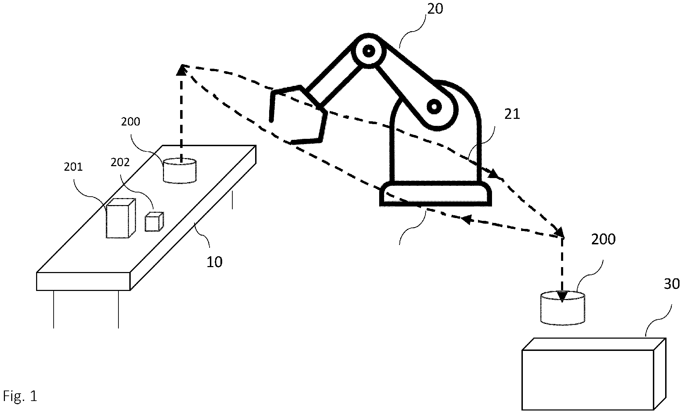

In Figur 1 ist ein Pick-Roboter 20 abgebildet, der dazu vorgesehen ist, einen Gegenstand 200 von einem Förderband 10 aufzugreifen und auf einer geplanten Bahn 21 zu bewegen, um ihn beispielsweise in einem Karton 30 abzulegen. Beispielsweise ist ein Sechsarmroboter vorgesehen, der fest installiert ist.

Das Förderband 10 ist beispielsweise ein umlaufendes Transportband, das in einem Anfangsbereich mit Gegenständen 200, 201, 202 beladen wird. Beispielsweise sollen alle Gegenstände, die auf das Förderband geladen werden, in dem Karton 30 verpackt werden. Das Förderband fährt beispielsweise in einem Normalbetrieb mit konstanter Geschwindigkeit. Die Geschwindigkeit kann beispielsweise flexibel eingestellt werden und in Ausgestaltungen auch während des Betriebs angepasst werden.

Die Gegenstände auf dem Förderband 10 sind beispielsweise zufällig angeordnet, d.h. mit variierendem Abstand und an variierenden Positionen.

Für die Aufnahme des Gegenstandes 200 vom laufenden Band ist der Roboter 20 so zu betreiben, dass zumindest für einen kurzen Zeitraum rund um die Aufnahme eine Synchronfahrt von Roboter 20 und Förderband 10 vorliegt. Je nach aktueller Geschwindigkeit des Bandes 10 und je nach Verteilung der Gegenstände auf dem Förderband 10 ist somit ein Aufsynchronisieren des Roboters 20 auf das Band 10 mit anschließender Synchronfahrt früher oder später erforderlich. Wurde der Gegenstand 200 aufgenommen, führt der Roboter 20 eine geplante Bahnbewegung 21 durch, die je nach Restriktionen im Arbeitsraum des Roboters 20, insbesondere je nach Hindernissen im Raum, oder je nach Anforderungen der Applikation, unterschiedlich ausfallen kann.

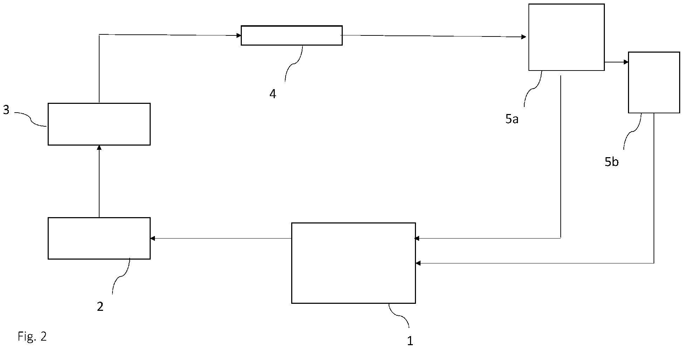

In Figur 2 ist in einem Ablaufdiagramm veranschaulicht, wie die Bahnbewegung des Roboters gemäß einem ersten Ausführungsbeispiel angepasst wird. Ausgangsbasis ist eine geplante Bahn zur Roboterbewegung mit einer entsprechenden Sollwertführung 1, die dem Roboter als Profil Geschwindigkeit über der Zeit vorgegeben wird. Daraus werden in einem ersten Schritt die kartesischen Werte 2 Ort, Geschwindigkeit und Beschleunigung für jeden Punkt im kartesischen Raum abhängig von der Zeit, also P(t), P'(t), P (t) ermittelt. Somit liegen die kartesische Geschwindigkeit und die kartesische Beschleunigung vor. Diese werden mittels inverser kinematischer Transformation umgerechnet in Achswerte 3, also in axiale Positionen, und wiederum deren Ableitungen.

Mittels der axialen Werte 3 werden unter Berücksichtigung des Kinetikmodells 4 die für den jeweiligen Zustand notwendigen Antriebskräfte und -momente an den Achsen 5a berechnet. Diese werden zur Online-Vorsteuerung der Antriebe ausgegeben.

Mittels maximaler Antriebskräfte und Antriebsmomente, die für die achsspezifisch beteiligten Antriebe bekannt sind, werden zudem die maximal möglichen Grenzwerte 5b der Zustandsgrößen ermittelt und als dynamische Grenzwerte der Bahn bei der Bewegungsführung 1 berücksichtigt.

Anschließend erfolgt die Abbildung auf die Bandfunktionalität, bei der das mittels der maximalen Antriebskräfte und Antriebsmomente ermittelte begrenzte korrigierte zeitbasierte Profil umgewandelt wird in ein bandbezogenes Profil. Bandbezogen heißt dabei, dass das Profil als Funktion von einer Bandposition angegeben wird.

Abhängig von den extrapolierten Werten des Förderbandverlaufs und dem berechneten Bandfehler mit räumlichem Bezug kann nun eine Korrektur vorgenommen werden, falls sich aufgrund eines geänderten Bandverlaufs für den Synchronisiervorgang geänderte Anforderungen an die Kinematik ergeben. Diese Korrekturen werden je Takt umgesetzt.

Somit kann nun zusätzlich zu den vorlaufend berechneten Korrekturen aufgrund der Begrenzungen, insbesondere aufgrund der maximalen axialen Belastungen, aufgrund zusätzlicher axialer Begrenzungen, die den Betrieb an einer Achse unterhalb der maximalen Auslastung halten, oder aufgrund programmierter Begrenzungen, die sich aus Anforderungen der Applikation, beispielsweise maximal zu fahrende Geschwindigkeiten, Beschleunigungen, oder Ruck ergeben, auch eine je Takt umzusetzende Korrektur aufgrund des extrapolierten Förderbandverhaltens erfolgen.

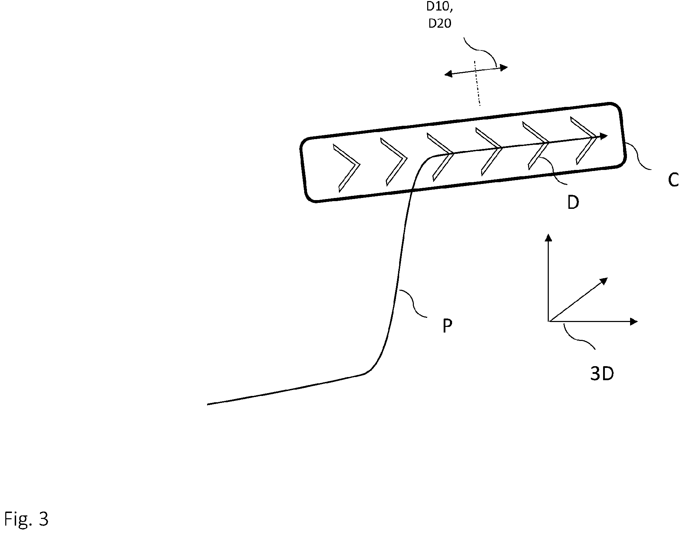

Figur 3 veranschaulicht den Einsatz der dynamischen Reserven: Es wird beispielsweise vom Endeffektor der Kinematik die Bahn P abgefahren. Die Pfeile D deuten die Bewegungsrichtung des Förderbandes C an. Zur Vorab-Kompensation werden dynamische Reserven vorgesehen. In Richtung D10 der Förderbandbewegung und entgegengesetzt D20 erfolgt ein Ausgleich für die Bandbewegung selbst. Die andere Reserve ist für den allgemeinen Raum vorgesehen und deckt die drei Raumrichtungen 3D ab, um Bandänderungen beim Auf-/Absynchronisieren zusätzlich zu berücksichtigen.

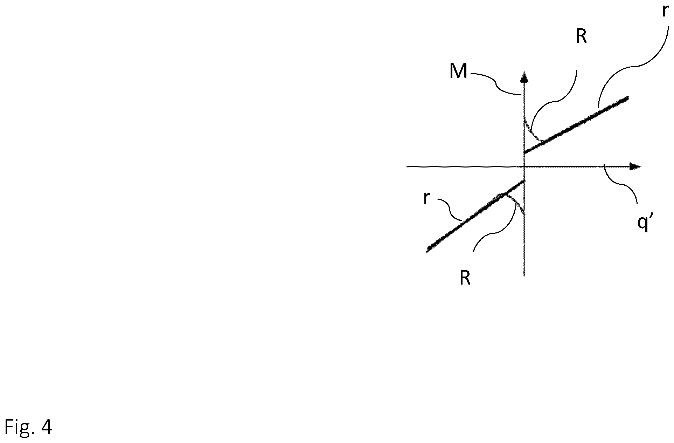

Figur 4 zeigt eine typische Reibkennlinie R und deren Abstraktion r. Aufgetragen ist das Reibmoment M über der Geschwindigkeit q'. Man erkennt die Geschwindigkeitsabhängigkeit. Im Nulldurchgang weist die Kennlinie eine Unstetigkeit auf Grund von Haftreibungseffekten auf. Solche Kennlinien zur Beschreibung des Verhaltens einer Kinematik sind bekannt.

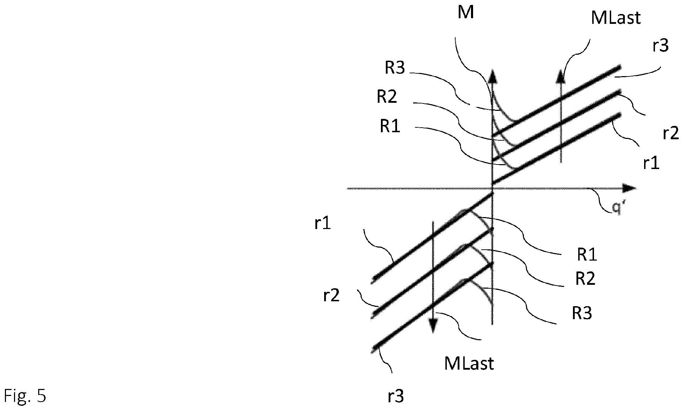

Figur 5 zeigt eine Anpassung der in einer Modellierung der Kinematik eingesetzten Reibkennlinie, aufgetragen als Reibmoment M über q', die zusätzlich eine Abhängigkeit vom übertragenen Moment MLast aufweist. Den Einfluss des übertragenen Momentes MLast für drei unterschiedliche übertragene Kräfte zeigt Figur 5: Je mehr Kräfte übertragen werden, desto höher ist die Reibung und die Reibkennlinie verschiebt sich hin zu absolut höheren Reibmomenten mit ansonsten im Wesentlichen analogen Verläufen der Reibkennlinien R1, R2, R3. Entsprechend verlaufen die abstrahierten Kennlinien r1, r2, r3. Bei höherer Last am Getriebe müssen die Massenträgheiten entsprechend überwunden werden, so dass diese höhere Reibung bei der Modellierung berücksichtigt wird.

**Patentansprüche**

1. Verfahren zum Ermitteln einer Bahnbewegung einer Kinematik (20) zur Aufnahme eines Gegenstandes (200) von einem Fördersystem (10), aufweisend folgende Schritte:

   - Bereitstellen eines Kinetikmodells (4) der Kinematik (20) abhängig von Massewerten, Trägheitsmomentwerten oder Trägheitstensorwerten der Kinematik (20),
   - Vorgeben von maximalen Antriebskräften und/oder maximalen Antriebsmomenten von Antrieben der Kinematik,
   - Ermitteln von Grenzwerten (5b) für Zustandsgrößen der Bahnbewegung, umfassend Geschwindigkeit und Beschleunigung, in Abhängigkeit von den maximalen Antriebskräften und/oder maximalen Antriebsmomenten basierend auf dem Kinetikmodell (4), wobei die Grenzwerte für eine Vielzahl von Punkten eines Arbeitsraumes der Kinematik ermittelt werden,
   - Extrapolation einer Position eines virtuellen Punktes auf dem Fördersystem (10) basierend auf Werten der Position und Geschwindigkeit und/oder Beschleunigung des virtuellen Punktes in jeweiligen Abtastzeitpunkten,
   - Ermitteln von Sollwerten für die Bahnbewegung in Abhängigkeit von den ermittelten Grenzwerten und von der extrapolierten Position, wobei die Bahnbewegung als Funktion der Position des virtuellen Punktes modelliert wird.

2. Verfahren nach Anspruch 1, wobei ein Modellieren der Bahnbewegung als Funktion der extrapolierten Position auf dem Fördersystem (10) eine explizite zeitliche Abhängigkeit eliminiert.

3. Verfahren nach Anspruch 1 oder 2, wobei ferner eine Extrapolation der zu der extrapolierten Position zugehörigen Dynamik erfolgt, insbesondere eine Extrapolation einer Geschwindigkeit und einer Beschleunigung des virtuellen Punktes.

4. Verfahren nach Anspruch 1 oder 2, wobei ferner Grenzwerte für einen Ruck als Zustandsgröße ermittelt werden.

5. Verfahren nach einem der vorstehenden Ansprüche, wobei ferner axiale Beschränkungen als Randbedingung in das Ermitteln der Sollwerte eingehen.

6. Verfahren nach einem der vorstehenden Ansprüche, wobei ferner programmierte, insbesondere bahnspezifische, Beschränkungen als Randbedingung in das Ermitteln der Sollwerte eingehen.

7. Verfahren nach einem der vorstehenden Ansprüche, wobei die Sollwerte für die Bahnbewegung vorlaufend in Abhängigkeit von den ermittelten Grenzwerten (5b), insbesondere für eine vorgesehene Bahn, ermittelt werden und online in Abhängigkeit von der extrapolierten Position, insbesondere für einen Sollwert je Takt, korrigiert werden.

8. Verfahren nach einem der vorstehenden Ansprüche, wobei eine Korrektur eines Sollwertes, die sich aus einer Abweichung der extrapolierten Position des virtuellen Punktes auf dem Fördersystem und einer tatsächlichen Position ergibt, online während eines Synchronisiervorganges zwischen dem Fördersystem (10) und der Kinematik (20) oder online bei einer Synchronfahrt des Fördersystems (10) mit der Kinematik (20) vorgenommen wird.

9. Verfahren nach einem der vorstehenden Ansprüche, wobei dynamische Reserven vorgesehen werden zur Vorab-Kompensation bei einem Überschreiten vorgesehener Beschränkungen aufgrund der durch die Extrapolation korrigierten Sollwerte.

10. Verfahren nach Anspruch 9, wobei eine dynamische Reserve die Kompensation der Bandgeschwindigkeit in Bandrichtung berücksichtigt.

11. Verfahren nach Anspruch 9 oder 10, wobei eine dynamische Reserve die Kompensation der Bandbewegung berücksichtigt.

12. Verfahren nach einem der vorstehenden Ansprüche, wobei das Kinetikmodell (4) ein Lastmoment-abhängiges Teilmodell aufweist.

13. Verfahren nach Anspruch 12, wobei das Teilmodell ein Reibmoment modelliert in Abhängigkeit von einer Gelenkgeschwindigkeit.

14. Verfahren nach Anspruch 12 oder 13, wobei ein Reibmoment des Teilmodells durch ein Kennfeld, insbesondere mittels zwischen Punkten des Kennfeldes interpolierten Zwischenwerten, abgebildet wird.

15. Computerprogramm, umfassend Befehle, die bei der Ausführung des Programms durch einen Computer diesen veranlassen, das Verfahren nach einem der Ansprüche 1 bis 14 auszuführen.

16. Steuerungseinrichtung ausgebildet und eingerichtet zum Ermitteln einer Bahnbewegung einer Kinematik (20) zur Aufnahme eines Gegenstandes (200) von einem Fördersystem (10) gemäß einem der Ansprüche 1 bis 14.

Fig. 1

Fig. 2

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 24 17 3454

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 218 556 A2 (KUKA ROBOTER GMBH [DE]) 18. August 2010 (2010-08-18) * das ganze Dokument * ----- | 1-16 | INV. B25J9/16 |
| A | WO 2019/110292 A1 (KUKA DEUTSCHLAND GMBH [DE]) 13. Juni 2019 (2019-06-13) * Seite 1, Zeile 22 - Seite 14, Zeile 29 * ----- | 1-16 | |
| A | DE 10 2014 104220 A1 (DENSO WAVE INC [JP]) 2. Oktober 2014 (2014-10-02) * Absatz [0010] - Absatz [0020] * ----- | 1-16 | |

**RECHERCHIERTE SACHGEBIETE (IPC)**

B25J
G05B

Der vorliegende Recherchenbericht wurde für alle Patentansprüche erstellt

| Recherchenort | Abschlußdatum der Recherche | Prüfer |
|---|---|---|
| Den Haag | 22. Oktober 2024 | Patsiopoulos, N |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 3454

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2024

| Im Recherchenbericht angeführtes Patentdokument | Datum der Veröffentlichung | Mitglied(er) der Patentfamilie | Datum der Veröffentlichung |
|---|---|---|---|
| EP 2218556 A2 | 18-08-2010 | CN 101799660 A | 11-08-2010 |
| | | DE 102009007026 A1 | 05-08-2010 |
| | | EP 2218556 A2 | 18-08-2010 |
| | | KR 20100089031 A | 11-08-2010 |
| | | US 2010198404 A1 | 05-08-2010 |
| WO 2019110292 A1 | 13-06-2019 | DE 102017011228 A1 | 06-06-2019 |
| | | EP 3720665 A1 | 14-10-2020 |
| | | WO 2019110292 A1 | 13-06-2019 |
| DE 102014104220 A1 | 02-10-2014 | DE 102014104220 A1 | 02-10-2014 |
| | | JP 6167770 B2 | 26-07-2017 |
| | | JP 2014193519 A | 09-10-2014 |
| | | US 2014297030 A1 | 02-10-2014 |

EPO FORM P0461

Für nähere Einzelheiten zu diesem Anhang : siehe Amtsblatt des Europäischen Patentamts, Nr.12/82